Europäisches Patentamt

European Patent Office

Office européen des brevets

(11) Numéro de publication: **0 293 299 B1**

(12) **FASCICULE DE BREVET EUROPEEN**

(45) Date de publication du fascicule du brevet: 12.12.90

(51) Int. Cl.⁵: **C10M 135/04**, C07C 321/00

(21) Numéro de dépôt: 88401279.0

(22) Date de dépôt: 25.05.88

(54) **Procédé d'obtention de compositions d'oléfines polysulfurées à teneur élevée en soufre et à très faible teneur en chlore.**

(30) Priorité: 27.05.87 FR 8707560
22.01.88 FR 8800830

(43) Date de publication de la demande:
30.11.88 Bulletin 88/48

(45) Mention de la délivrance du brevet:
12.12.90 Bulletin 90/50

(84) Etats contractants désignés:
BE CH DE ES FR GB GR IT LI LU NL SE

(56) Documents cités:
EP-A- 0 159 936
EP-A- 0 271 368
FR-A- 2 588 881
US-A- 2 708 199
US-A- 4 204 969

(73) Titulaire: **INSTITUT FRANCAIS DU PETROLE, 4, Avenue de Bois-Préau, F-92502 Rueil-Malmaison(FR)**

(72) Inventeur: **Born, Maurice, 72, rue du Vieux Pont, F-92000 Nanterre(FR)**
Inventeur: **Briquet, Lucienne, 26, avenue de la République, F-92500 Rueil Malmaison(FR)**
Inventeur: **Parc, Guy, 27, rue du Chateau, F-92500 Rueil Malmaison(FR)**

ACTORUM AG

## Description

L'invention concerne le domaine des additifs organiques sulfurés utilisés notamment pour améliorer les propriétés extrême-pression des lubrifiants; elle concerne plus particulièrement un nouveau procédé d'obtention de produits du type aléfines polysulfurées, à teneur en soufre élevée et à très faible teneur en chlore, utilisables comme additifs pour lubrifiants.

On trouve décrit dans l'art antérieur un certain nombre de procédés visant à la préparation d'oléfines polysulfurées utilisables comme additifs extrême-pression pour lubrifiants.

En particulier, les brevets des Etats-Unis US-A 3 471 404 et 3 697 499 décrivent un procédé dont les étapes principales sont les suivantes:

(1) on fait réagir du monochlorure de soufre avec un excès d'une oléfine de 2 à 5 atomes de carbone, en particulier l'isobutène, à une température de 20 à 80°C, de manière à former un "adduct";

(2) on fait réagir l'"adduct" de la première étape avec un sulfure de métal alcalin (de préférence du sulfure de sodium) et du soufre élémentaire, utilisés dans un rapport de 1,8 et 2,2 moles de sulfure métallique par atome-gramme de soufre, la proportion de sulfure de métal alcalin étant en outre de 0,8 à 1,2 mole par mole d'"adduct", et la réaction étant effectuée en présence d'un alcool ou d'un solvant hydro-alcoolique, au reflux; et

(3) on fait réagir le produit obtenu, qui contient de 1 à 3% de chlore, avec une base minérale en solution aqueuse au reflux, jusqu'à ce que la teneur résiduelle en chlore du produit soit inférieure à 0,5%.

Il est indiqué dans ces brevets antérieurs que la teneur en soufre des produits obtenus pouvait être de 40 à 60% en masse. En réalité, elle est le plus souvent voisine de 46% en masse. Ces produits peuvent être utilisés comme additifs extrême-pression pour les huiles lubrifiantes, les fluides de transmission ou les graisses, les bases lubrifiantes considérées consistant en des huiles minérales et certaines huiles synthétiques.

Par ailleurs, le brevet des Etats-Unis US-A 4 204 969 décrit un procédé assez voisin pour préparer des oléfines polysulfurées utilisables comme additifs extrême-pression pour huiles lubrifiantes; ce procédé comprend les étapes principales suivantes:

(1) on fait réagir à environ 30–100°C du monochlorure de soufre avec une monooléfine aliphatique de $C_3$ à $C_6$ (en général l'isobutène) de préférence en présence d'un promoteur consistant en un alcool inférieur, de manière à former un "adduct";

(2) on fait réagir cet "adduct" avec du soufre et du sulfure de sodium (préparé par exemple à partir de NaOH, NaHS et/ou $H_2S$) dans un rapport de 0,1 à 0,4 atome-gramme de soufre par mole de sulfure de sodium, en milieu hydroalcoolique à une température allant de 50°C au reflux; et l'on récupère le produit obtenu sans traitement au moyen d'une base. L'alcool inférieur, de 1 à 4 atomes de carbone, est en général présent en une quantité massique de 0,1 à 0,5 parties par par partie d'eau.

Il est indiqué dans l'exemple unique que le produit a une teneur en soufre de 49% en masse et une viscosité à 37,8°C (100°F) de 8,6 $mm^2/s$ (cSt); mais l'analyse indique qu'un tel produit contient encore une teneur en chlore résiduel d'environ 0,25% en masse.

Le document US-A 2 708 199 décrit la préparation de polysulfures organiques par un procédé qui comprend:

– la formation d'un produit d'addition entre une oléfine de 6 à 30 atomes de carbone et un halogénure de soufre (plus particulièrement le monochlorure de soufre $S_2Cl_2$);

– puis la réaction du produit obtenu avec un polysulfure inorganique soluble dans l'eau (plus particulièrement $Na_2S_4$); cette réaction étant effectuée dans un solvant hydroalcoolique (l'acool étant plus particulièrement l'éthanol ou le méthanol ou encore de l'éthylèneglycol, du propylèneglycol ou du glycérol).

Le document EP-A 0 159 936 décrit des oléfines polysulfurées obtenues par un procédé dans lequel on met en contact un adduct formé de la même façon (par réaction de monochlorure de soufre et/ou de dichlorure de soufre avec au moins une monooléfine en $C_2$–$C_5$) conjointement à au moins un composé hydrocarboné monohalogéné, avec un composé sulfuré choisi parmi les sulfures, les hydrogénosulfures et les polysulfures de métaux alcalins, d'ammonium ou de métaux alcalino-terreux, au sein d'un milieu aqueux ou hydroalcoolique; on chauffe le mélange résultant, on sépare deux phases et on récupère l'oléfine polysulfurée recherchée dans la phase organique.

Les teneurs en chlore des produits considérés dans ce document sont encore relativement élevées: de 0,44 à 1,08 en en poids dans les exemples.

Dans le document antérieur FR-A 2 588 881 les compositions d'oléfines polysulfurée considérées sont définies de la même manière que dans le document EP-A 0 159 936, à cela près que le composé hydrocarboné monohalogéné mis en jeu conjointement à l'adduct est insaturé.

Quant aux teneurs en chlore résiduel des produits obtenus, elles sont elles aussi relativement élevées: on trouve dans les exemples des valeurs de 0,25 à 0,55 % en poids.

L'examen de l'art antérieur montre que les polysulfures d'isobutylène, préparés dans des milieux réactionnels renfermant des proportions d'eau importantes, contiennent toujours des quantités de chlore résiduel supérieures à 0,1% en masse, l'élimination complète du chlore étant rendue difficile du fait de l'insolubilité de l'"adduct" dans le milieu réactionnel, d'où une réaction en phase hétérogène incomplète.

Dans la majorité des procédés décrits, l'eau est généralement introduite dans le milieu réactionnel, en présence d'une quantité mineure d'un alcool (notamment l'isopropanol), pour dissoudre le sulfure alcalin utilisé qui renferme lui-même le plus souvent une quantité notable d'eau d'hydratation (au moins 40 % en masse dans le cas du $Na_2S$ industriel).

Il est cependant possible d'augmenter le caractère solvant du milieu réactionnel vis-à-vis de l'adduct en substituant l'eau de dissolution du sulfure alcalin hydraté par un alcool inférieur, mais les quantités d'alcool à mettre en oeuvre sont alors incompatibles avec une production industrielle économiquement satisfaisante.

On sait par ailleurs que des contraintes toxicologiques et écologiques orientent actuellement une nouvelle législation, en matière d'additifs pour lubrifiants, qui vraisemblablement imposera dans les toutes prochaines années, une teneur en chlore maximale sensiblement inférieure à 0,1 % en masse pour ces produits.

On a maintenant découvert qu'il était économiquement possible d'utiliser un milieu réactionnel dans lequel l'"adduct" est soluble, d'où une réactivité accrue vis-à-vis du polysulfure alcalin. Ce nouveau milieu réactionnel n'entraîne pas de volumes réactionnels supérieurs à ceux requis par l'art antérieur, et conduit à des compositions d'oléfines (poly)sulfurées qui renferment des teneurs en soufre très élevées pour de très faibles teneurs en chlore résiduel, et pourront, à ce titre, être avantageusement utilisées comme additifs pour lubrifiants, dont elles améliorent notamment les propriétés extrême-pression.

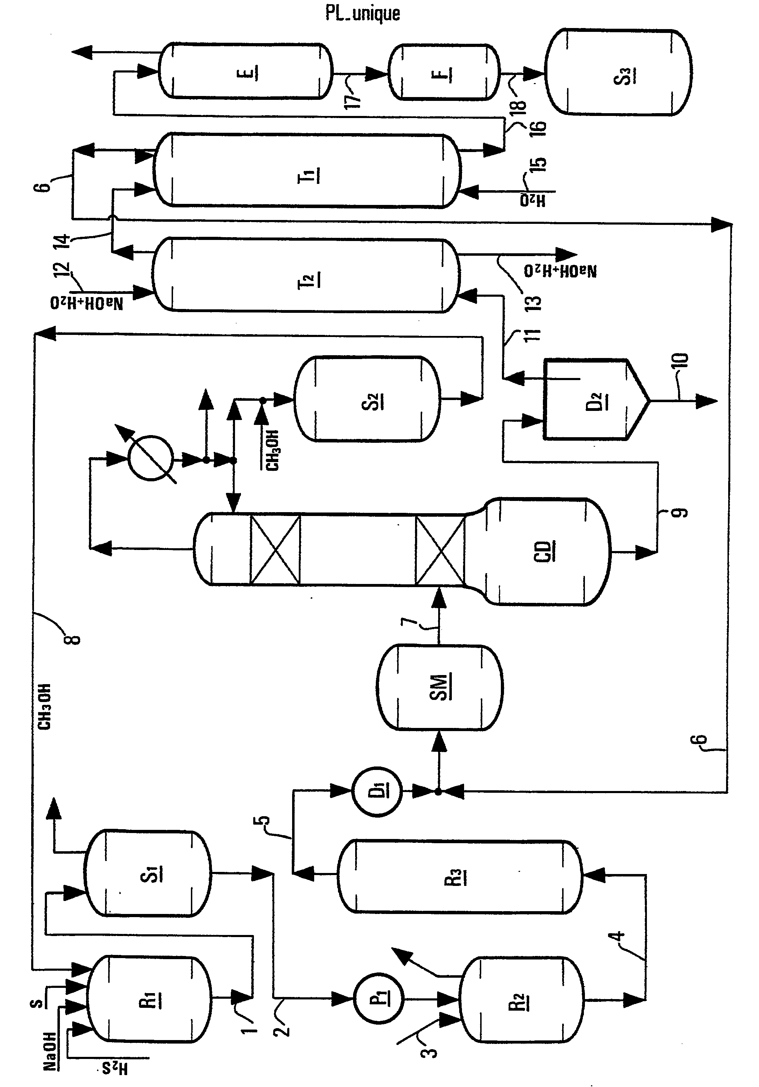

La figure 1 annexée représente un schéma de réalisation en continu du procédé de préparation d'additif selon l'invention.

D'une manière générale, le procédé d'obtention des compositions d'oléfines polysulfurées de l'invention peut être défini en ce qu'il comprend les étapes suivantes:

(1) on fait réagir au moins un composé choisi parmi le monochlorure et le dichlorure de soufre avec au moins une monooléfine aliphatique de 2 à 12 atomes de carbone pour former un produit d'addition ou "adduct";
(2) on met en contact ledit "adduct" formé dans l'étape (1) ainsi qu'au moins un composé hydrocarboné monohalogéné avec un composé sulfuré;
(3) on récupère l'oléfine polysulfurée dans la phase organique après décantation de la phase aqueuse,

laquelle étape (2) du procédé étant caractérisée en ce que:

a) on fait réagir de l'hydrogène sulfuré avec de l'hydroxyde de sodium, de potassium ou d'ammonium en solution dans au moins un monoalcool aliphatique substantiellement anhydre de 1 à 4 atomes de carbone;
b) on met en contact ledit "adduct" formé dans l'étape (1) ainsi qu'au moins un composé hydrocarboné monohalogéné, saturé ou insaturé, avec la solution alcoolique obtenue à l'issue de l'étape a);
c) on chauffe le mélange résultant de l'étape b), on élimine ledit monoalcool tout en ajoutant de l'eau en une quantité suffisante pour maintenir en solution les réactifs et les produits minéraux; et
(4) éventuellement, on traite le produit obtenu par un composé basique, tel qu'une base minérale, et on le lave à l'eau.

Dans l'étape (1) du procédé de l'invention, les oléfines de départ peuvent renfermer de 2 à 5 atomes de carbone, et être utilisées seules ou en mélanges. On utilise le plus souvent l'isobutylène. On peut aussi prévoir d'utiliser ces oléfines en mélange avec des proportions mineures d'oléfines de plus de 5 atomes de carbone (par exemple du diisobutylène).

L'oléfine peut être utilisée en une proportion de 1,5 à 2,5 moles, de préférence de 1,8 à 2,2 moles, par mole de monochlorure et/ou de dichlorure de soufre. Elle est en général introduite dans le monochlorure et/ou le dichlorure de soufre liquide à une température de 20 à 80°C, plus spécifiquement de 30 à 50°C. Cette étape est réalisée en milieu anhydre.

Le composé sulfuré préparé dans l'étape (2a) avoir les proportions d'un sulfure, d'un hydrogénosulfure et/ou d'un polysulfure de métal alcalin (par exemple sodium ou potassium) ou d'ammonium ou d'un mélange de ceux-ci.

Il s'agit le plus souvent de composés de sodium. On utilise en général de 0,1 à 1 mole d'hydrogène sulfuré, et de préférence de 0,3 à 0,7 mole d'hydrogène sulfuré par mole d'hydroxyde.

Il est bien entendu possible d'utiliser une proportion d'hydrogène sulfuré supérieure, mais dans ce cas, la proportion efficace d'hydrogène sulfuré n'est pas nécessairement accrue, la quantité qui n'a pas réagi se trouvant alors libérée.

Le soufre élémentaire éventuellement mis en jeu dans l'étape (2a), conjointement au composé sulfuré, peut être avec l'hydroxyde introduit, dans un rapport molaire allant de 0 jusqu'à environ 3,6/1, plus particulièrement de 0 à 2,5/1.

Dans l'étape (2a), on forme le composé sulfuré, et on introduit éventuellement le soufre élémentaire, dans un monoalcool aliphatique léger, renfermant de 1 à 4 atomes de carbone, substantiellement anhydre.

Comme monoalcools aliphatiques légers, on peut citer: le méthanol, l'éthanol, le n-propanol, l'isopropanol, le n-butanol, l'isobutanol et le tert-butanol, le méthanol étant préféré; la quantité mise en jeu est avantageusement de 100 à 400 cm³, de préférence de 125 à 200 cm³ par mole d'hydroxyde utilisée.

Par monoalcool aliphatique substantiellement anhydre, on entend dans l'invention un monoalcool aliphatique ne contenant pas plus de 10% en poids d'eau, de préférence moins de 5% en poids d'eau; dans le cas préféré du méthanol, on peut utiliser le produit pratiquement pur, à plus de 99,9% de méthanol.

Dans l'étape (2b) du procédé, le ou les composés hydrocarbonés saturés et/ou insaturés monohalogénés utilisés conjointement à l'"adduct" obtenu à l'issue de l'étape (1), peuvent consister en des chlorures, des bromures ou des iodures d'alkyles ou d'alkényles, linéaires ou ramifiés, en $C_1$ à $C_{12}$ (de préférence en $C_2$ à $C_4$), de cycloalkyles et/ou cycloalkényles éventuellement substitués, en $C_5$ à $C_{12}$ (de préférence en $C_6$), ou d'arylalkyles et/ou arylalkényles, éventuellement substitués, en $C_6$ à $C_{12}$ (de préférence en $C_8$ et $C_9$).

On peut citer comme exemples notamment les chlorures, bromures et iodures de méthyle, d'éthyle, d'isopropyle, de n-propyle, de tert-butyle, d'isobutyle, de n-butyle, de tert-amyle, d'isoamyle, de n-amyle, de n-hexyle, d'éthyl-2 hexyle, de n-octyle, de cyclohexyle et de benzyle et leurs mélanges.

On peut encore citer le chloro-1 éthylène, le chloro-1 propène, le chloro-2 propène, le chloro-3 propène, le chloro-1 butène-1, le chloro-1 butène-2, le chloro-2 butène-2, le chloro-3 butène-1, le chloro-1 méthyl-2 propène, le chloro-3 méthyl-2 propène, ou encore le chloro-3 phényl-1 propène-1, le chloro-2 thiophène, ainsi que les dérivés bromés et iodés correspondants.

On utilise avantageusement le chlorure de n-butyle et le chlorure de méthallyle.

Dans le cadre de l'invention, il est possible de remplacer au moins en partie le composé hydrocarboné monohalogéné tel que défini plus haut par au moins un composé hydrocarboné monohalogéné portant en outre au moins un groupement fonctionnel comportant un ou plusieurs hétéroatomes (tels que l'oxygène et/ou l'azote et/ou le soufre).

Parmi ces composés hydrocarbonés monohalogénés fonctionnels, on utilisera principalement les composés monochlorés ou monobromés ; ils seront avantageusements choisis parmi

. les composés monohalogénés renfermant au moins une fonction alcool et notamment :

- des halogénures de monalcools aliphatiques, alicycliques ou aromatique-aliphatiques renfermant par exemple de 2 à 18 atomes de carbone, tels que par exemple les chloro-2 et bromo-2 éthanols, les chloro- et bromo-propanols, butanols, pentanols, hexanols, heptanols, octanols, nonanols, décanols, undécanols et dodécanols, et les alcools chloro- ou bromo-benzyliques, et les alcools chloro- ou bromo-phényléthyliques ;

- des halogénures de polylols, tels que par exemple le chloro-3 ou le bromo-3 propanediol-1,2 (et les dérivés époxy correspondants ; par exemple de chloro-1 ou le bromo-1 époxy-2,3 propane) ;

- des halogénures de monoalcools (poly-) oxyalkylénés, tels que par exemple les chloro- et bromo- (poly-) éthoxyéthanols, (poly-) éthoxypropanols, (poly-) propoxyéthanols et (poly-)propoxypropanols ;

. les composés monohalogénés renfermant au moins une fonction phénol, tels que par exemple des chloro- et bromo- phénols non substitués ou substitués par exemple par des groupements alkyles ;

. les composés monohalogénés renfermant au moins une fonction carboxylique, tels que par exemple les acides chloro- et bromo-acétiques, propioniques, butyriques, valériques, benzoiques et succiniques ;

. les composés monohalogénés renferment au moins une fonction amine, notamment des composés aliphatiques, alicycliques ou aromatique-aliphatiques, tels que par exemple le chlorhydrate de chloro-éthylamine et les chlorhydrates de chloro-N,N diméthyl-, diéthyl- et dipropyl- éthylamines, les chloro- et bromo-benzylamines et les chloro- et bromo-phényléthylamines ;

. les composés monohalogénés renfermant au moins une fonction amide, tels que par exemple les chloro- et bromo- acétamides et propionamides ; ou encore

. les composés monohalogénés renfermant au moins une fonction thiol, tels que par exemple les chloro- et bromo- mercaptobenzothiazoles, les chloro- et bromo-phénylmercaptans et les chloro- et bromo-benzylmercaptans.

Parmi les comosés monohalogénés fonctionnels présentant des groupements de plusieurs types différents, on peut citer :

. des composés à fonctions hydroxyle et acide carboxylique, tels que par exemple l'acide chloro-5 salicylique ou l'acide chloro-3 hydroxy-4 mandélique ;

. des composés à fonctions amine et acide carboxylique, tels que par exemple la chloro-4 phénylalanine; ou encore

. des composés à fonctions hydroxyle et amine.

Sans sortir du cadre de l'invention, on peut utiliser ces composés hydrocarbonés monohalogénés fonctionnels conjointement aux composés hydrocarbonés monohalogénés non fonctionnels tels que définis plus haut, et ce, en toutes proportions.

Dans la suite on utilisera indifféremment l'expression "composés hydrocarbonés monohalogénés" pour désigner d'une manière générale les composés non fonctionnels et les composés fonctionnels mis en jeu, ou leurs mélanges.

Lorsque, dans l'étape (2b) du procédé de l'invention, on met en jeu au moins un composé monohalogéné fonctionnel tel que défini plus haut, il est avantageux d'effectuer la réaction de cette étape en présence d'une faible quantité (par exemple de 0,1 à 10% en masse) d'au moins un catalyseur de transfert de phases, notamment un halogénure d'ammonium quaternaire (par exemple le chlorure de tétrabutylammonium), ou un halogénure d'alkylphosphonium, ou encore un "éthercouronne" (ou cryptate).

La proportion de composé hydrocarboné monohalogéné utilisée est en général de 1 à 70% en atomes-gramme d'halogène par rapport au nombre total d'atomes-gramme d'halogène de l'ensemble "adduct" ou mélange d'adducts + composé hydrocarboné monohalogéné. Cette proportion correspond en général à un nombre de moles de composé hydrocarboné monohalogéné d'environ 0,015 à 1,9 pour 100 g d'"adduct" en particulier lorsque la monooléfine de départ est l'isobutylène.

La proportion d'"adduct" et de composé hydrocarboné monohalogéné utilisée par rapport à l'hydroxyde mis en jeu correspond en général à un nombre d'atomes d'halogène par mole d'hydroxyde allant de 1/1 à 0,5/1, de préférence de 0,85/1 à 0,75/1.

L'étape (2b) peut être effectuées sous une faible surpression, la pression relative peut aller par exemple jusqu'à 1 MPa (10 bars).

Les additifs de l'invention peuvent aussi être préparés au moyen d'un procédé fonctionnant en continu à courants parallèles et à contacts multiples. Dans ce cas, la réaction de l'étape (2b) est en général effectuée sous pression.

Un tel mode de réalisation sera décrit plus en détail dans l'exemple 12, en relation avec la figure annexée.

Les compositions d'oléfines polysulfurées préparées l'invention peuvent présenter une teneur en soufre allant jusqu'à environ 65% en masse, pour des teneurs en chlore résiduel particulièrement faibles généralement inférieures à environ 0,1% en masse, le plus souvent inférieures à 0,05%, et parfois même aussi faibles qu'environ 0,01% en masse, en particulier dans le cas de l'emploi du méthanol et/ou d'une légère pression réactionnelle.

Les produits préparés selon l'invention qui renferment des teneurs en soufre inférieures à 50% en masse ont une solubilité suffisante dans les huiles minérales pour être utilisés dans la formulation des huiles extrême-pression antiusure pour engrenages.

Les peoduits préparés selon l'invention qui renferment des teneurs en soufre supérieures à 50% jusqu'à environ 65% en masse ont une solubilité dans les huiles minérales plus limitée, mais encore suffisante pour les applications auxquelles elles peuvent être destinées (huiles pour le travail des métaux par exemple); en outre, ils sont entièrement solubles dans des solvants pétroliers courants tels que le white-spirit ou dans des coupes pétrolières à caractère plus aromatique.

L'invention s'étend à la préparation de compositions d'oléfines polysulfurées telles que définies précédemment, mais qui dérivent d'au moins une oléfine renfermant de 6 à 12 atomes de carbone. Il s'agit le plus souvent de diisobutylène, d'hexènes, de nonènes ou de dodécènes. Ces oléfines peuvent également être utilisées en mélange avec des proportions mineures d'oléfines de 2 à 5 atomes de carbone (par exemple l'isobutylène).

Dans cet aspect de l'invention, toutes les indications opératoires décrites plus haut restent applicables. Toutefois, on peut préciser que:

– le rapport molaire préféré du soufre élémentaire à l'hydroxyde introduit est de 0 à 3,5/1; et que
– la quantité préférée de monoalcool aliphatique mis en jeu est de 125 à 400 cm$^3$ par mole d'hydroxyde utilisée.

Par ailleurs, la proportion de composé hydrocarboné monohalogéné qui est habituellement de 1 à 70% en atomes-gramme d'halogène par rapport au nombre total d'atomes-gramme d'halogène de l'ensemble adduct (ou mélange d'adducts) + composé hydrocarboné monohalogéné correspond à environ 0,01–1,9 mole pour 100 g d'adduct(s), en particulier lorsque la monooléfine de départ est le diisobutylène.

Dans cet aspect de l'invention, les compositions d'oléfines polysulfurées obtenues présentent en général une teneur en soufre allant jusqu'à environ 50% en masse, les teneurs en chlore résiduel étant particulièrement faibles, généralement inférieures à environ 0,1% en masse, le plus souvent inférieures à 0,05% et parfois même aussi faibles qu'environ 0,02% en masse.

D'une manière générale, les compositions d'oléfines polysulfurées obtenus selon l'invention qui ont une corrosivité vis-à-vis du cuivre inférieure à 3 à 121°C selon l'ASTM D 130 (la proportion de composition d'oléfine polysulfurée correspondant à une teneur en soufre de 2% en masse par rapport à l'huile) peuvent être utilisées dans la formulation des huiles extrême-pression autiusure pour engrenages et des huiles pour la coupe des métaux cuivreux.

Les compositions d'oléfines polysulfurées obtenues selon l'invention qui ont une corrosivité vis-à-vis du cuivre supérieure ou égale à 3 à 121°C selon l'ASTM D 130 (dans les mêmes conditions que ci-dessus) peuvent être utilisées pour les formulations d'huiles de coupe des métaux ferreux.

Les exemples suivants illustrent l'invention, sans la limiter. L'exemple 1A est donné à titre de comparaison.

## EXEMPLE 1

Dans un réacteur de 10 litres, muni d'un agitateur, on introduit 2700 g de monochlorure de soufre $S_2Cl_2$ (20 moles), puis, par l'intermédiaire d'un tube plongeant, on introduit sous la surface du $S_2Cl_2$ constamment agité, 2530 g d'isobutylène (48,7 moles), dans lequel on a préalablement dissous 25 g de méthanol. La température du milieu réactionnel est maintenue entre 45 et 50°C durant toute la durée d'introduction de l'isobutylène (1 heure). On obtient ainsi 5000 g de produit d'addition que l'on désigne par le terme d'"adduct".

Dans un second réacteur de 1 litre muni d'un agitateur et surmonté d'un système permettant la distillation, on introduit 98 g de soude en pastilles (2,45 moles) et 400 cm³ de méthanol anhydre, puis on agite le mélange jusqu'à dissolution complète.

Par l'intermédiaire d'un tube plongeant dans la phase alcoolique, on introduit 41,65 g d'hydrogène sulfuré (1,225 mole) pendant une période de 1 heure, le mélange réactionnel étant maintenu vers 50°C par refroidissement extérieur.

On ajoute ensuite dans le milieu 14,52 g de soufre en fleur (0,45 at-g), puis on chauffe le mélange sous agitation à la température de reflux du méthanol pendant 1 heure pour favoriser la formation du polysulfure de sodium.

Par l'intermédiaire d'une ampule à brome, on introduit dans la solution alcoolique de polysulfure de sodium un mélange constitué de 230 g d'"adduct" et de 15 g (soit environ 16,2 $10^{-2}$ mole) de chlorure de n-butyle (durée d'introduction : 2 heures), la température réactionnelle étant régulée par le reflux du méthanol à ébullition.

On laisse réagir au reflux pendant 7 heures, puis on élimine progressivement le méthanol par distillation, alors que, parallèlement, on introduit progressivement 350 cm³ d'eau dans le mélange en ébullition.

Après distillation complète du méthanol, on sépare la phase organique chaude (supérieure) de la phase aqueuse contenant le NaCl formé et l'excès de polysulfure de sodium.

La phase organique est traitée au reflux sous agitation pendant 3 heures par 200 g d'une solution de soude aqueuse à 10 % en masse.

Après décantation, la phase organique récupérée est lavée deux fois avec 200 cm³ d'eau, séchée sur $Na_2SO_4$ anhydre puis filtrée. On recueille ainsi 168 g d'un liquide jaune orangé dont les caractéristiques sont indiquées dans le tableau 1.

Le pouvoir mutagène éventuel du produit obtenu dans cet exemple a été étudié dans le test de micronucléus à une dose de 5.000 mg/kg, sur des souris.

Les animaux (5 mâles et 5 femelles par lot) ont reçu deux injections intrapéritonéales à 24 heures d'intervalle et ont été sacrifiés 6 heures après la deuxième injection. Pour chaque animal, on a effectué l'observation de 1.000 érythrocytes polychromatophiles provenant de la moelle fémorale.

Dans les conditions expérimentales utilisées, il apparait que le produit n'a pas induit d'effet mutagène.

## EXEMPLE 1A

Dans un réacteur on introduit 90 g d'une solution aqueuse à 32,1 % en masse d'hydrogénosulfure de sodium et 41,3 g d'une solution aqueuse de soude à 50 % en masse.

On ajoute ensuite à ce mélange 44,4 g d'isopropanol et 2,9 g de soufre en fleur. On agite pendant 5 minutes, on ajoute 55,1 cm³ d'eau, puis on chauffe le mélange à 75° C. On introduit ensuite dans ce mélange 105 g d'"adduct" isobutylène/$S_2Cl_2$ (Cl = 27,9 % en masse), goutte à goutte en 2 heures ; on porte ensuite le mélange agité, à la température du reflux pendant 4 heures.

L'isopropanol est ensuite distillé jusqu'à 90° C à pression atmosphérique, puis sous pression réduite pour éliminer les dernières traces d'isopropanol et la majeure partie de l'eau.

La phase organique soufrée récupérée est lavée avec 68 g d'eau distillée pour éliminer le sel formé, puis une seconde fois, avec un mélange constitué de 68 g d'eau et de 34 g d'hexane, en portant le mélange agité" au reflux pendant 0,5 heure.

Après décantation, la phase aqueuse est écartée et la phase organique évaporée de façon à éliminer l'hexane. Le produit brut ainsi obtenu est filtré pour obtenir un additif dont les principales caractéristiques physico-chimiques sont les suivantes :
S = 48,6 % en masse
Cl = 2.550 ppm

## EXEMPLE 2

L'expérimentation de l'exemple 1 est reprise en substituant le méthanol par le même volume d'éthanol absolu ; après réaction, traitement à la soude puis traitements de récupération, on recueille 160 g d'un liquide orangé dont les caractéristiques sont rassemblées dans le tableau 1.

## EXEMPLE 3

L'expérimentation de l'exemple 2 est reprise en substituant l'éthanol par le même volume d'isopropanol ; on recueille 140 g d'un liquide jaune orangé dont les caractéristiques sont indiquées dans le tableau 1.

## EXEMPLE 4

L'expérimentation de l'exemple 1 est reprise en utilisant 98 g (2,45 moles) de soude en pastilles, 41,65 g d'$H_2S$ (1,225 mole), mais en n'utilisant pas de soufre en fleur. Après réaction avec le mélange chloré (230 g d'"'adduct" + 15 g de chlorure de n-butyle) puis après distillation du méthanol, la phase organique soufrée récupérée est lavée, séchée et filtrée sans traitement préalable à la soude à 10 %. On recueille ainsi 168 g d'un liquide jaune orangé dont les caractéristiques sont indiquées dans le tableau 1.

## EXEMPLE 5

L'expérimentation de l'exemple 4 est reprise en utilisant cette fois 57 g d'$H_2S$ (1,67 mole) ; on recueille 168 g d'un liquide jaune orangé dont les caractéristiques sont voisines de celles de l'additif obtenu dans l'exemple 4 ; elles sont indiquées dans le tableau 1.

## EXEMPLE 6

L'expérimentation de l'exemple 1 est reprise en utilisant 98 g (2,45 moles) de soude en pastilles, 41,65 g de $H_2S$ (1,225 mole), 39,3 g de soufre en fleur, 400 cm³ de méthanol et un mélange de 215 g d'"'adduct" et de 30 g de chlorure de n-butyle. Après réaction puis traitement à la soude à 10 %, on recueille 195 g d'un liquide jaune orangé dont les caractéristiques figurent sur le tableau 1.

## EXEMPLE 7

L'expérimentation de l'exemple 6 est reprise en utilisant 98 g (2,45 moles) de soude en pastilles, 41,65 g d'$H_2S$ (1,225 mole), 152 g de soufre en fleur (4,75 at-g), 400 cm³ de méthanol et un mélange halogéné constitué de 110 g d'"'adduct" et de 105 g de chlorure de n-butyle. Après réaction puis distillation de l'alcool méthylique, la phase organique soufrée récupérée est lavée, séchée et filtrée sans traitement préalable à la soude. On recueille ainsi 218,7 g d'un liquide orangé dont les caractéristiques sont indiquées dans le tableau 1.

## EXEMPLE 8

L'expérimentation de l'exemple 1 est reprise en laissant réagir le mélange halogéné sur la solution alcoolique de polysulfure de sodium pendant 16 heures. L'additif (163 g), obtenu après traitement, possède les caractéristiques indiquées dans le tableau 1.

## EXEMPLE 9

L'expérimentation de l'exemple 1 est reprise en effectuant la réaction sous une pression de 3 bars absolus (0,3 MPa) de façon à maintenir, pendant 7 heures, la température réactionnelle du mélange halogéné sur le polysulfure de sodium alcoolique vers 105°C. Les caractéristiques de l'additif obtenu après traitements (167 g), sont rassemblées dans le tableau 1.

## EXEMPLE 10

L'expérimentation de l'exemple 1 est reprise en remplaçant le chlorure de n-butyle par la même quantité molaire de chloro-3 méthyl-2 propène (14,7 g). L'additif (167 g) obtenu après traitements, possède les caractéristiques indiquées dans le tableau 1.

## EXEMPLE 11

L'expérimentation de l'exemple 1 est reprise en utilisant un mélange halogéné constitué de 162,5 g d'"'adduct" et de 65,6 g de chloro-1 époxy-2,3 propane (0,71 mole).
Après 7 heures de reflux on laisse refroidir, puis on ajoute 200 cm³ de toluène pour extraire l'additif soufré ; après agitation puis décantation, la phase organique récupérée est lavée deux fois avec 200 cm³ d'eau distillée, séchée sur $Na_2SO_4$ anhydre, filtrée puis évaporée sous pression réduite pour éliminer le toluène. On récupère ainsi 157g d'un liquide brun visqueux dont l'analyse infra-rouge indique la présence de la fonction alcool et l'absence de la fonction éther ; les caractéristiques physico-chimiques du produit sont les suivantes :
(S) % masse = 41

(Cl) % masse = 0,12 $I_{OH}$ = 120
Viscosité cinématique à 100°C (mm²/s) = 26
Solubilité dans :
Huile 100 Neutral Solvent : insoluble
Benzène, Toluène, Xylène : soluble
Acétone : soluble

## EXEMPLE 12

Cet exemple décrit un mode opératoire permettant la production en continu sous faible pression d'un additif contenant environ 46 % en masse de soufre et une teneur en chlore résiduel de 0,025 % en masse.

Pour préparer une solution alcoolique de polysulfure de sodium, on introduit dans un réacteur R1 21,83 parties en masse de méthanol, 6,75 parties de soude en pastilles, 2,69 parties d'$H_2S$ et 1 partie de soufre en fleur ; le mélange chauffé à 70°C est ensuite transféré par la ligne 1 dans le bac de stockage S1, pour permettre la fabrication de la charge suivante de polysulfure.

La solution alcoolique de polysulfure de sodium est soutirée du bac de stockage S1 puis envoyée dans le réacteur R2 (sous une pression de 2 bars ; pompe P1) par la ligne 2, au débit pondéral de 2,36 parties/h. Parallèlement, on introduit dans le réacteur R2 1,23 partie/h d'un mélange halogéné constitué d'une patie en masse de chlorure de n-butyle pour 15,33 parties d'"adduct", par la ligne 3.

Après un temps de séjour moyen de 2 heures, le mélange réactionnel chauffé à 105°C sous agitation est soutiré en continu du réacteur R2 pour être transféré par la ligne 4 à la base du réacteur R3 (de type "piston") dans lequel la réaction est menée à son terme, à la même température de 105°C, après un temps de séjour moyen de 5 heures. Le mélange réactionnel est repris au sommet du réacteur R3 par la ligne 5 pour être dirigé après détente à pression atmopshérique (détendeur D1) vers un mélangeur statique SM, dans lequel on introduit simultanément 1,75 partie/h d'eau provenant de la tour de lavage T1, par la ligne 6.

Le mélange obtenu est transféré par la ligne 7 dans une colonne à distiller CD, au sommet de laquelle le méthanol est récupéré dans un bac de stockage S2 à partir duquel, et après appoint, le méthanol est recyclé par la ligne 8 vers le réacteur R1 de fabrication de la solution alcoolique de polysulfure de sodium.

L'additif soufré brut, mélangé à une solution aqueuse contenant le polysulfure de sodium excédentaire, du chlorure de sodium et des traces de méthanol est repris en pied de la colonne à distiller pour être acheminé par la ligne 9 vers un décanteur D2 où s'effectue la séparation des deux phases liquides, à la température de 90°C.

La phase aqueuse est éliminée à la base du décanteur par la ligne 10. L'additif soufré brut est repris à la partie supérieure du décanteur D2 par la ligne 11, pour être dirigé à la base d'une tour d'extraction T2, dans laquelle il est mis en contact, à contre-courant, avec une solution aqueuse de soude à 10 % en masse, admise à un débit de 1 partie/h par la ligne 12. La température dans la tour T2 est de 100°C.

La phase lourde, constituée de la solution aqueuse de soude et de polysulfure de sodium, est éliminée à la base du réacteur par la ligne 13.

La phase légère, constituée par l'additif soufré lavé, s'écoule en surverse, par la ligne 14, au sommet de la tour de lavage T1, où elle rencontre, à contre-courant, un flux ascendant de 1,75 partie d'eau amené par la ligne 15. La température dans la tour T1 est de 90°C.

La phase aqueuse légère récupérée au sommet de la tour de lavage est dirigée par la ligne 6 vers le mélangeur statique SM, comme indiqué plus haut.

La phase lourde, constituée par l'additif soufré lavé, est soutirée à la base de la tour T1 et envoyée par la ligne 16 dans un évaporateur E, dans lequel les traces d'eau et les constituants légers sont éliminés sous pression réduite, à la température de 100°C.

L'additif sec récupéré à la base de l'évaporateur E est repris par la ligne 17 pour être acheminé après passage dans le filtre F, vers le bac de stockage S3 par la ligne 18.

Les caractéristiques de l'additif ainsi obtenu sont indiquées dans le tableau 1.

Dans le tableau 1, on a indiqué d'une pat les proportions molaires des réactifs mis en jeu en les rapportant à la quantité de soude utilisée, (le symbole C1 représentant en atomes-gramme de chlore la quantité totale d'"adduct" et de composé hydrocarboné monohalogéné mis en jeu) et d'autre part certaines caractéristiques des produits obtenus.

TABLEAU 1

| Additif de l'exemple | Préparation Rapports molaires entre les réactifs mis en jeu | | | Produit obtenu | | |
|---|---|---|---|---|---|---|
| | Cl/NaOH | H$_2$S/NaOH | S/NaOH | Soufre contenu par l'additif (% masse) | Chlore résiduel dans l'additif * (% masse) | Viscosité cinématique à 100°C (mm$^2$/s) |
| 1 | 0,83 | 0,5 | 0,184 | 46,5 | 0,026 | 16,9 |
| 2 | 0,83 | 0,5 | 0,184 | 43,2 | 0,040 | 16,1 |
| 3 | 0,83 | 0,5 | 0,184 | 37,4 | 0,11 | 15,4 |
| 4 | 0,83 | 0,5 | 0 | 47,2 | 0,025 | - |
| 5 | 0,83 | 0,68 | 0 | 47,3 | 0,025 | 15,3 |
| 6 | 0,83 | 0,5 | 0,184 | 47,2 | 0,031 | 12,7 |
| 7 | 0,83 | 0,5 | 1,939 | 63,8 | 0,0125 | 12,3 |
| 8 | 0,83 | 0,5 | 0,184 | 46,4 | 0,014 | 11,4 |
| 9 | 0,83 | 0,5 | 0,184 | 46,6 | 0,012 | 14,2 |
| 10 | 0,83 | 0,5 | 0,184 | 46,5 | 0,026 | 15,2 |
| 12 | 0,83· | 0,5 | 0,184 | 46,3 | 0,025 | 15,5 |

(*) Dosage par fluorescence X.

EXEMPLE 13

Dans un réacteur de 1 l, muni d'un agitateur et d'un réfrigérant, on introduit 650 g (5,8 moles) de diisobutylène puis, goutte à goutte en 1 heure, on ajoute sous agitation 371,8 g de S$_2$Cl$_2$ (2,75 moles), en maintenant la température réactionnelle inférieure à 45°C.

Après réaction, on recueille 900 g d'un produit d'addition que l'on désigne par le terme d'"adduct" (Cl = 15,4 % en masse).

Dans un second réacteur de 1 l muni d'un réfrigérant, d'un agitateur et d'un dispositif permettant la distillation, on introduit 400 cm3 de méthanol anhydre et 41 g de soude en pastilles (1,03 mole) ; on agite jusqu'à dissolution totale de la soude puis, par l'intermédiaire d'un tube plongeant sous la surface du liquide, on admet un courant de 17,47 g d'H$_2$S gazeux (0,513 mole) pendant une période de 1 heure, le mélange réactionel étant maintenu vers 50°C par refroidissement extérieur.

On ajoute ensuite dans le milieu 6,1 g de soufre en fleur (0,19 at-g), puis on chauffe le mélange sous agitation à la température de reflux du méthanol pendant 1 heure pour favoriser la formation du polysulfure de sodium.

Par l'intermédiaire d'une ampoule à brome, on introduit dans la solution de polysulfure de sodium un mélange halogéné constitué par 198 g de l'"adduct" S$_2$Cl$_2$/diisobutylène précédemment préparé et 6,9 g de chlorure de n-butyle (durée d'introduction : 2 heures) ; la température réactionnelle étant régulée par le reflux du méthanol à ébullition.

On laisse réagir au reflux du méthanol pendant 7 heures, puis on élimine progressivement le méthanol par distillation, alors que, parallèllement, on introduit progressivement 350 cm3 d'eau dans le milieu en ébullition.

Après distillation complète du méthanol, on sépare la phase organique chaude de la phase aqueuse contenant le NaCl formé et l'excès de polysulfure de sodium.

La phase organique est traitée au reflux sous agitation pendant 3 heures par 200 cm3 d'une solution aqueuse de soude à 10 % en masse.

Après décantation, la phase organique récupérée est lavée deux fois avec 200 cm3 d'eau, séchée sur Na$_2$SO$_4$ anhydre puis filtrée. On recueille ainsi 164 g d'un liquide jaune dont les caractéristiques sont indiquées dans le tableau 2.

EXEMPLE 14

L'expérimentation de l'exemple 13 est reprise en utilisant un mélange halogéné constitué de 94,50 g d'"adduct" diisobutylène/S$_2$Cl$_2$ et 48,4 g de chlorure de n-butyle et un polysulfure de sodium préparé dans 400 cm3 de méthanol anhydre à partir de 41 g de soude (1,03 mole), 17,47 g de H$_2$S gazeux (0,513 mole) et de 109,7 g de soufre en fleur (3,42 at-g).

Après réaction puis distillation de l'alcool méthylique, la phase organique récupérée est directement lavée à l'eau, sans traitement préalable à la soude, séchée sur $Na_2SO_4$ anhydre, puis filtrée. On recueille ainsi 146 g d'une huile jaune orangée dont les caractéristiques sont indiquées dans le tableau 2.

EXEMPLE 15

Dans un réacteur de 1 l, on introduit 400 g d'une coupe oléfinique constituée de 85 % en moles d'hexènes et de 15 % en moles de nonènes (coupe oléfinique obtenue par dimérisation du propylène par le procédé DIMERSOL, désignée par "Dimate"). On ajoute ensuite goutte à goutte en 1 heure 309 g de $S_2Cl_2$ (2,284 moles), en maintenant la température inférieure ou égale à 30°C.

Après réaction, on recueille 665 g d'un produit d'addition que l'on désigne par le terme d'"adduct" (Cl = 23,8 % en masse).

L'expérimentation est poursuivie dans le second réacteur en utilisant un polysulfure de sodium préparé comme dans l'exemple 13, et en employant un mélange halogéné constitué de 125 g d'"adduct" Dimate/$S_2Cl_2$ et de 6,9 g de chlorure de n-butyle.

Après réaction puis traitement à la soude à 10 %, le produit obtenu est lavé deux fois avec 200 cm3 d'eau, séché sur $Na_2SO_4$ anhydre puis filtré. On recueille ainsi 90 g d'une huile jaune dont les caractéristiques sont indiquées dans le tableau 2.

EXEMPLE 16

L'expérimentation de l'exemple 13 est reprise en utilisant dans le premier réacteur 200 g d'une coupe oléfinique en C9 (tripropylène 1,59 moles) et 102 g de $S_2Cl_2$ (0,86 mole).

Après réaction, on recueille 283 g d'un produit d'addition que l'on désigne par le terme d'"adduct" (Cl = 16,4 % en masse).

Dans un second réacteur de 1 l contenant un polysulfure de sodium - préparé à partir de 41 g de soude (1,03 mole), 17,47 g d'$H_2S$ gazeux (0,513 mole), de 91,6 g de soufre en fleur (2,86 at-g) et de 400 cm3 de méthanol anhydre - on introduit goutte à goutte en 2 heures un mélange halogéné constitué de 185,7 g d'"adduct" tripropylène/$S_2Cl_2$ et de 6,9 g de chlorure de n-butyle.

Après réaction puis distillation de l'alcool méthylique, la phase organique récupérée et traitée comme dans l'exemple 14. On recueille ainsi 170 g d'un liquide orangé dont les caractéristiques sont rassemblées dans le tableau 2.

EXEMPLE 17

Dans un réacteur de 1 l muni d'un agitateur, on introduit 150 g de diisobutylène (1,34 mole) dans lesquels on dissout 26,3 g d'isobutylène (0,5 mole). On introduit ensuite goutte à goutte, par l'intermédiaire d'une ampoule à brome 114 g de $S_2Cl_2$ (0,85 mole) en maintenant la température réactionnelle vers 20°C.

Après réaction, on recueille 260 g d'un produit d'addition, que l'on désigne par le terme d'"adduct". (Cl = 17,8 % en masse).

Dans un second réacteur de 1 l, muni d'un agitateur, d'un réfrigérant et d'un dispositif permettant la distillation, on introduit successivement 300 cm3 de méthanol anhydre, 41 g de soude (1,03 mole), 17,47 g d'$H_2S$ gazeux (0,513 mole) et 16,45 g de soufre en fleur (0,513 at-g).

Après formation du polysulfure alcalin, on introduit goutte à goutte dans le milieu, un mélange constitué par 148,8 g d'"adduct" diisobutylène/isobutylène/$S_2Cl_2$ et 17,25 g de chlorure de n-butyle (durée d'introduction : 2 heures).

On laisse réagir au reflux du méthanol pendant 7 heures puis on poursuit l'expérimentation comme dans l'exemple 13.

Après décantation et sans traitement à la soude à 10 %, on récupère après séchage et filtration 122 g d'un liquide orangé dont les caractéristiques sont indiquées dans le tableau 2.

EXEMPLE 18

Dans un réacteur de 1 l, muni d'un agitateur, d'un réfrigérant et d'un dispositif permettant la distillation, on introduit successivement 400 cm3 de méthanol anhydre, 41 g de soude (1,03 mole), 17,47 g d'$H_2S$ gazeux (0,513 mole) et 8,22 g de soufre en fleur (0,257 at-g).

Après formation du polysulfure de sodium, on ajoute goutte à goutte, sous agitation, un mélange constitué de 107,5 g d'"adduct" ex-diisobutylène préparé dans l'exemple 13, de 62,5 g d'"adduct" ex-Dimate préparé dans l'exemple 15 et 6,9 g de chlorure de n-butyle (durée d'introduction : 2 heures).

L'expérimentation, poursuivie comme dans l'exemple 13, conduit, après traitements, à un liquide jaune (124 g) dont les caractéristiques sont indiquées dans le tableau 2.

TABLEAU 2

| Additif de l'exemple | Préparation Rapports molaires entre les réactifs mis en jeu | | | Produit obtenu | | Viscosité cinématique à 100°C (mm²/S) |
| | Cl/NaOH | H₂S/NaOH | S/NaOH | Soufre contenu par l'additif (% masse) | Chlore résiduel dans l'additif* (ppm) | |
|---|---|---|---|---|---|---|
| 13 | 0.909 | 0.5 | 0.249 | 30.5 | 210 | 9.2 |
| 14 | 0.909 | 0.5 | 3.320 | 45.7 | 200 | 8.7 |
| 15 | 0.909 | 0.5 | 0.249 | 39.8 | 197 | 11.5 |
| 16 | 0.909 | 0.5 | 2.777 | 44.0 | 240 | 8.8 |
| 17 | 0.909 | 0.5 | 0.498 | 37.6 | 214 | 13.4 |
| 18 | 0.909 | 0.5 | 0.250 | 34.5 | 222 | 8.1 |

\* Dosage par fluorescence X.

## SOLUBILITE DES ADDITIFS DE L'INVENTION

La solubilité des additifs préparés selon les exemples 1 à 12 est mesurée à 20°C et à 5°C dans une huile minérale SAE 90 et dans du white-spirit pour des concentrations égales à 5 % en masse ; les résultats obtenus sont rassemblés dans le tableau 3 suivant :

TABLEAU 3

| Additif de l'exemple | Teneur en soufre (% masse) | Solubilité après 15 jours dans | | |
| | | Huile SAE 90 minérale | | White-spirit |
| | | 20°C | 5°C | 20°C |
|---|---|---|---|---|
| 1 | 46,5 | Soluble | Soluble | Soluble |
| 2 | 43,2 | Sol | Sol | Sol |
| 3 | 37,4 | Sol | Sol | Sol |
| 4 | 47,2 | Sol | Sol | Sol |
| 5 | 47,3 | Sol | Sol | Sol |
| 6 | 47,2 | Insol | Insol | Sol |
| 7* | 63,8 | Insol | Insol | Sol |
| 8 | 46,4 | Sol | Sol | Sol |
| 9 | 46,6 | Sol | Sol | Sol |
| 10 | 46,5 | Sol | Sol | Sol |
| 12 | 46,3 | Sol | Sol | Sol |

(*) : Insoluble à 5 % masse dans SAE 90

Soluble en toutes proportions dans le white-spirit et dans les coupes pétrolières aromatiques.

EP 0 293 299 B1

## MESURE DE L'ACTIVITE CORROSIVE DES PRODUITS SELON L'INVENTION

On réalise des essais de corrosion à la lame de cuivre selon la norme ASTM D 130 (NF M 07-015), à partir d'une huile minérale SAE 90 contenant une proportion d'additif correspondant à une teneur en soufre de 2 % en masse.

Les résultats obtenus sont rassemblés dans les tableaux 4 et 5 suivants. Ils sont exprimés par une cotation comprenant un nombre de (1 à 4), ce nombre étant suivi d'une lettre précisant la nuance de la corrosion de la lame de cuivre.

### TABLEAU 4

| Additif de l'exemple | [ S ] dans l'additif (% masse) | 3 heures à | |
|---|---|---|---|
| | | 100°C | 121°C |
| 1 | 46,5 | 1 a | 1 b |
| 2 | 43,2 | 1 a | 1 b |
| 3 | 37,4 | 1 a | 1 b |
| 4 | 47,2 | 2 a | 2 b |
| 5 | 47,3 | 2 a | 2 b |
| 6 | 47,2 | 2 b | 3 b |
| 7 | 63,8 | 3 c | 4 c |
| 8 | 46,4 | 1 a | 1 b |
| 9 | 46,6 | 1 a | 1 b |
| 10 | 46,4 | 1 a | 1 b |
| 12 | 46,3 | 1 a | · 1 b |

### TABLEAU 5

| Additif de l'exemple | [S] dans l'additif (% masse) | 3 heures à | |
|---|---|---|---|
| | | 100°C | 121°C |
| 13 | 30.5 | 1 a | 1 b |
| 14 , | 45.7 | 4 c | - |
| 15 | 39.8 | 1 a | 1 b |
| 16 | 44.0 | 4 c | - |
| 17 | 37.6 | 4 c | - |
| 18 | 34.6 | 1 a | 1 b |

Pour la formulation des huiles d'engrenages d'automobiles et des huiles pour le travail des métaux cuivreux, on utilisera de préférence les additifs conduisant à une cotation inférieure à 3 (en particulier à 121 °C). Pour la formulation d'huiles pour le travail des métaux ferreux, on peut utiliser les produits préparés selon l'invention et préférentiellement ceux qui conduisent à des cotations de corrosion élevées, par exemple ceux obtenus dans les exemples 6, 7, 14, 16 et 17.

## EVALUATION DES PROPRIETES EXTREME-PRESSION DES ADDITIFS SELON L'INVENTION

On a réalisé des essais mettant en évidence les propriétés extrême-pression des additifs de l'invention, d'une part dans des formulations du type huiles d'engrenages (A) et, d'autre part, dans des formulations du type huiles de travail des métaux (B).

A1) Les additifs des exemples et 1, 8, 9, 10 et 12 ont été étudiés à l'aide d'une machine 4 billes selon les procédures de l'ASTM D 2783 et de l'ASTM D 2266, à la concentration de 1,5 % en masse dans l'huile SAE 90 ; les résultats obtenus ont été rassemblés dans le tableau 6.

TABLEAU 6

| Additif de l'Exemple | Indice charge-usure | | Charge de soudure | | Ø d'empreinte des billes 1 h sous 40 kgf (392,4N) (mm) |
|---|---|---|---|---|---|
| | (Kgf) | (N) | (Kgf) | (N) | |
| sans | 22,2 | 217,8 | 160 | 1569,6 | 0,80 |
| 1 | 63,4 | 621,9 | 400 | 3924,0 | 0,62 |
| 8 | 62,5 | 613,1 | 400 | 3924,0 | 0,65 |
| 9 | 64,4 | 631,8 | 400 | 3924,0 | 0,67 |
| 10 | 65,0 | 637,6 | 400 | 3924,0 | 0,62 |
| 12 | 64,5 | 632,7 | 400 | 3924,0 | 0,65 |

A2) Les additifs des exemples 13, 15 et 18 ont été étudiés à l'aide d'une machine 4 billes selon les procédures de l'ASTM D 2783 et de l'ASTM D 2266, à des concentrations telles que la teneur en soufre dans l'huile SAE 90 soit de 0,7 % en masse ; les résultats obtenus ont été rassemblés dans le tableau 7.

On constate que les additifs selon l'invention qui sont caractérisés par une faible corrosivité vis-à-vis du cuivre peuvent être utilement employés pour la formulation d'huile d'engrenages et d'huiles pour la coupe des métaux cuivreux, compte tenu de leurs caractéristiques extrême-pression élevées.

TABLEAU 7

| Additif de l'exemple | Indice charge-usure | | Charge de soudure | | Ø d'empreinte des billes 1 h sous 40 kgf (392.4N) (mm) |
|---|---|---|---|---|---|
| | (Kgf) | (N) | (Kgf) | (N) | |
| sans | 22.2 | 217.8 | 160 | 1569.6 | 0.80 |
| 13 | 60.4 | 592.5 | 400 | 3924.0 | 0.66 |
| 15 | 59.5 | 583.7 | 400 | 3924.0 | 0.68 |
| 18 | 60.0 | 592.5 | 400 | 3924.0 | 0.67 |

B1) On a réalisé des essais mettant en évidence les propriétés extrême-pression de l'additif préparé selon l'exemple 7 dans une formulation du type huile de coupe des métaux, au moyen d'une machine 4 billes selon la procédure ASTM D 2783.

La formulation lubrifiante étudiée était constituée d'une huile 100 Neutral Solvent renfermant 3 % en masse de chlore sous forme de paraffine chlorée et 1 % en masse de soufre sous forme d'additif soufré de l'exemple 7. Les résultats obtenus sont rassemblés dans le tableau 8 ci-après.

Les résultats obtenus montrent que l'additif de l'invention renfermant plus de 60 % en masse de soufre possède une solubilité encore suffisante dans une huile minérale 100 Neutral pour conduire à des performances extrême-pression très élevées, d'où son intérêt pour la formulation d'huiles de travail des métaux.

B2) On a réalisé des essais mettant en évidence les propriétés extrême-pression des additifs préparés selon les exemples 14, 16 et 17 dans une formule du type huile de coupe des métaux, au moyen d'une machine 4 billes selon la procédure ASTM D 2783.

La formulation lubrifiante étudiée était constituée d'une huile 100 Neutral Solvent renfermant 3 % en masse de chlore sous forme de paraffine chlorée et 1 % en masse de soufre sous forme d'additif soufré. Les résultats obtenus sont rassemblés dans le tableau 9.

Les résultats montrent que les additifs de l'invention qui présentent une corrosivité élevée par rapport au cuivre conduisent à des performances extrême-pression très élevées et qu'ils peuvent, à ce titre, être utilement utilisés pour la formulation d'huiles de travail des métaux ferreux.

13

TABLEAU 8

| Paraffine chlorée (% masse) | Additif de l'exemple | S % masse de l'additif soufré | % masse de l'additif dans l'huile | Solubilité dans l'huile 100 N.S | | Essais 4 billes E.P. | | | | | |
|---|---|---|---|---|---|---|---|---|---|---|---|
| | | | | 20°C | 0°C | Indice charge/ usure | | Charge avant grippage | | Charge de soudure | |
| | | | | | | (kgf) | (N) | (kgf) | (N) | (kgf) | (N) |
| sans | sans | - | - | - | - | 21,4 | 209,9 | 50 | 490,5 | 116 | 1138,0 |
| 4,62 | sans | - | - | limpide | limpide | 38,1 | 373,8 | 80 | 784,8 | 200 | 1962 |
| sans | 7 | 63,8 | 1,56 | limpide | limpide | 44,0 | 431,6 | 80 | 784,8 | 315 | 3090,1 |
| 4,62 | 7 | 63,8 | 1,56 | limpide | limpide | 98,0 | 961,4 | 100 | 981,0 | 620 | 6082,2 |

EP 0 293 299 B1

TABLEAU 9

| Paraffine chlorée (% masse) | Additif de l'exemple | S % masse de l'additif soufré | % masse de l'additif dans l'huile | Essais 4 billes E.P. | | | | | |
|---|---|---|---|---|---|---|---|---|---|
| | | | | Indice charge/usure | | Charge avant grippage | | Charge de soudure | |
| | | | | (Kgf) | (N) | (Kgf) | (N) | (Kgf) | (N) |
| sans | sans | - | - | 21.4 | 209.9 | 50 | 490.5 | 116 | 1138.0 |
| 4.62 | sans | - | - | 38.1 | 373.8 | 80 | 784.8 | 200 | 1962.0 |
| sans | 14 | 45.7 | 2.19 | 46.2 | 453.2 | 80 | 784.8 | 315 | 3090.1 |
| 4.62 | 14 | 45.7 | 2.19 | 97.1 | 952.6 | 100 | 981.0 | 620 | 6082.2 |
| sans | 16 | 44.0 | 2.27 | 44.6 | 437.5 | 80 | 784.8 | 315 | 3090.1 |
| 4.62 | 16 | 44.0 | 2.27 | 95.0 | 932.0 | 100 | 981.0 | 620 | 6082.2 |
| sans | 17 | 37.6 | 2.67 | 41.2 | 404.2 | 80 | 784.8 | 250 | 2452.5 |
| 4.62 | 17 | 37.6 | 2.67 | 89.7 | 880.0 | 100 | 981.0 | 500 | 4905.0 |

## Revendications

1. Procédé d'obtention de compositions d'oléfines polysulfurées à teneur élevée en soufre et à très faible teneur en chlore dans lequel:

(1) on fait réagir au moins un composé choisi parmi le monochlorure et le dichlorure de soufre avec au moins une monoléfine aliphatique de 2 à 12 atomes de carbone pour former un produit d'addition ou "adduct";

(2) on met en contact ledit "adduct" formé dans l'étape (1) ainsi qu'au moins un composé hydrocarboné monohalogéné avec un composé sulfuré:

(3) on récupère l'oléfine polysulfurée dans la phase organique après décantation de la phase aqueuse, laquelle étape (2) du procédé étant caractérisée en ce que:

a) on fait réagir de l'hydrogène sulfuré avec de l'hydroxyde de sodium, de potassium ou d'ammonium en solution dans au moins un monoalcool aliphatique substantiellement anhydre de 1 à 4 atomes de carbone ;

b) on met en contact ledit "adduct" formé dans l'étape (1) ainsi qu'au moins un composé hydrocarboné monohalogéné, saturé ou insaturé, avec la solution alcoolique obtenue à l'issue de l'étape a);

c) on chauffe le mélange résultant de l'étape b), on élimine ledit monoalcool tout en ajoutant de l'eau en une quantité suffisante pour maintenir en solution les réactifs et les produits minéraux.

2. Procédé selon la revendication 1, caractérisé en ce que, dans l'étape (1), on utilise de 1,5 à 2,5 moles de monooléfine aliphatique par mole de mono et/ou de dichlorure de soufre et on opère à une température de 20 à 80°C.

3. Procédé selon l'une des revendications 1 et 2, caractérisé en ce que, dans l'étape (2a), on utilise de 100 à 400 cm³ de monoalcool aliphatique et de 0,1 à 1 mole d'hydrogène sulfuré par mole d'hydroxyde.

4. Procédé selon la revendication 3, caractérisé en ce que l'on utilise de 0,3 à 0,7 mole d'hydrogène sulfuré par mole d'hydroxyde.

5. Procédé selon l'une des revendications 1 à 4, caractérisé en ce que le monoalcool aliphatique est le méthanol et l'hydroxyde est la soude.

6. Procédé selon l'une des revendications 1 à 5, caractérisé en ce que, dans l'étape (2a), on ajoute du soufre élémentaire au mélange de réaction.

7. Procédé selon la revendication 6, caractérisé en ce que la proportion de soufre élémentaire introduite va jusqu'à environ 3,6 moles par mole d'hydroxyde introduite.

8. Procédé selon l'une des revendications 1 à 7, caractérisé en ce que dans l'étape (2b), le composé hydrocarboné monohalogéné représente de 1 à 70% en atomes-gramme d'halogène par rapport à l'ensemble "adduct" ou mélange d'adducts + composé hydrocarboné monohalogéné, ledit "adduct" ou mélange d'adducts et ledit composé hydrocarboné monhalogéné sont mis en jeu en une proportion de 1/1 à 0,5/1 en atomes-gramme d'halogène par mole d'hydroxyde, et la température est de 20 à 120°C.

9. Procédé selon l'une des revendications 1 à 8, caractérisé en ce que la réaction de l'étape (2b) est effectuée sous une pression relative allant jusqu'à environ 1 MPa.

10. Procédé selon l'une des revendications 1 à 9, caractérisé en ce que, dans l'étape (2c), la température va de 50°C à la température de reflux du milieu.

11. Procédé selon l'une des revendications 1 à 10, caractérisé en ce qu'il comprend une étape (4) dans laquelle la composition d'oléfine polysulfurée obtenue est mise en contact avec un composé basique puis lavée à l'eau.

12. Procédé selon l'une des revendications 1 à 11, caractérisé en ce qu'il est effectué en continu selon un processus à courants parallèles et à contacts multiples.

13. Procédé selon l'une des revendications 1 à 12, caractérisé en ce que la composition d'oléfine polysulfurée obtenue présente une teneur en soufre allant jusqu'à 65% en masse et une teneur en chlore inférieure à environ 0,1% en masse.

14. Procédé selon la revendication 13, caractérisé en ce que ladite composition a une teneur en chlore inférieure à environ 0,05% en masse.

## Claims

1. A process for obtaining polysulfided olefin compositions of high sulfur content and of very low chlorine content, wherein:

(1) at least one compound selected from sulfur monochloride and sulfur dichloride is reacted with at least one aliphatic monoolefin of 2–12 carbon atoms, to form an addition product or "adduct",

(2) said "adduct" formed in step (1) and at least one monohalogenated hydrocarbon compound are contacted with a sulfur compound,

(3) the polysulfided olefin is recovered in the organic phase after settling of the aqueous phase, said step (2) of the process being characterized in that:

(a) hydrogen sulfide is reacted with sodium, potassium or ammonium hydroxide dissolved in at least one substantially anhydrous aliphatic monoalcohol of 1 to 4 carbon atoms;

(b) said "adduct" formed in step (1) and at least one saturated or unsaturated monohalogenated hydrocarbon compound are contacted with the alcoholic solution obtained at the end of step (a);

EP 0 293 299 B1

(c) the mixture resulting from step (b) is heated, said monoalcohol is removed, while a sufficient amount of water is added to maintain in solution the reactants and the inorganic products.

2. A process according to claim 1, characterized in that, in step (1), 1.5 to 2.5 moles of aliphatic monoolefin are used per mole of sulfur mono- and/or dichloride and the operation is conducted at a temperature from 20 to 80°C.

3. A process according to one of claims 1 and 2, characterized in that, in step (2a), 100–400 cm³ of aliphatic monoalcohol and 0.1–1 mole of hydrogen sulfide are used per mole of hydroxide.

4. A process according to claim 3, characterized in that 0.3–0.7 mole of hydrogen sulfide is used per mole of hydroxide.

5. A process according to one of claims 1 to 4, characterized in that the monoaliphatic alcohol is methanol and the hydroxide is sodium hydroxide.

6. A process according to one of claims 1 to 5, characterized in that, in step (2a), elemental sulfur is added to the reaction mixture.

7. A process according to claim 6, characterized in that the proportion of elemental sulfur introduced is up to about 3.6 moles per mole of hydroxide introduced.

8. A process according to one of claims 1 to 7, characterized in that, in step (2a), the monohalogenated hydrocarbon compound represents 1–70% by halogen gram-atoms with respect to the assembly: "adduct" or adduct mixture + monohalogenated hydrocarbon compound, said "adduct" or adduct mixture and said monohalogenated hydrocarbon compound are used in a proportion from 1/1 to 0.5/1 halogen gram-atoms per mole of hydroxide, and the temperature ranges from 20 to 120°C.

9. A process according to one of claims 3 to 8, characterized in that the reaction of step (2b) is conducted under a relative pressure up to about 1 MPa.

10. A process according to one of claims 1 to 8, characterized in that, in step (2c), the temperature ranges from 50°C to the reflux temperature of the medium.

11. A process according to one of claims 1 to 10, characterized in that it comprises a step (4) in which the polysulfided olefin composition obtained is contacted with a basic compound and washed with water.

12. A process according to one of claims 1 to 11, characterized in that it is conducted in a continuous way according to a method with parallel streams and multiple contacts.

13. A process according to one of claims 1 to 12, characterized in that the polysulfided olefin composition obtained has a sulfur content up to 65% by weight and a chlorine content lower than about 0.1% by weight.

14. A process according to claim 13, characterized in that said composition has a chlorine content lower that about 0.05% by weight.

**Patentansprüche**

1. Verfahren zum Erhalt polysulfurierter Olefinzusammensetzungen mit erhöhtem Schwefelgehalt und sehr niedrigem Chlorgehalt, bei dem man:
(1) wenigstens eine Verbindung, die gewählt ist aus dem Monochlorid und dem Dichlorid des Schwefels, mit wenigstens einem aliphatischen Monoolefin mit 2 bis 12 Kohlenstoffatomen zur Bildung eines Additionsproduktes oder "Addukts" reagieren läßt;
(2) dieses in Stufe (1) gebildete "Addukt" sowie wenigstens eine monohalogenierte kohlenwasserstoffhaltige Verbindung mit einer sulfurierten Verbindung in kontaktiert;
(3) man das polysufurierte Olefin in der organischen Phase nach Dekantieren der wässrigen Phase gewinnt, wobei die Stufe (2) des Verfahrens sich dadurch auszeichnet, daß:
a) man Schwefelwasserstoff mit dem Hydroxid des Natriums, des Kaliums oder Ammoniums in Lösung in wenigstens einem im wesentlichen wasserfreien aliphatischen Monoalkohol mit 1 bis 4 Kohlenstoffatomen reagieren läßt;
b) man dieses in Stufe (1) geformte "Addukt" sowie wenigstens eine monohalogenierte gesättigte oder ungesättigte kohlenwasserstoffhaltige Verbindung mit der am Ausgang der Stufe a) erhaltenen alkoholischen Lösung in Kontakt bringt;
c) man das aus der Stufe b) resultierende Gemisch erhitzt, man den Monoalkohol entfernt, indem man Wasser in ausreichender Menge zusetzt, um die Reaktionsmittel und die mineralischen Produkte in Lösung zu halten.

2. Verfahren nach Anspruch 1, dadurch gekennzeichnet, daß in Stufe (1) man 1,5 bis 2,5 Mole aliphatisches Monoolefin pro Mol Schwefelmono- und/oder Dichlorid verwendet und man bei einer Temperatur von 20 bis 80°C arbeitet.

3. Verfahren nach einem der Ansprüche 1 und 2, dadurch gekennzeichnet, daß in Stufe (2a) man 100 bis 400 cm³ aliphatischen Monoalkohol und 0,1 bis 1 Mol Schwefelwasserstoff pro Mol Hydroxid verwendet.

4. Verfahren nach Anspruch 3, dadurch gekennzeichnet, daß man 0,3 bis 0,7 Mol Schwefelwasserstoff pro Mol Hydroxid verwendet.

5. Verfahren nach einem der Ansprüche 1 bis 4, dadurch gekennzeichnet, daß der aliphatische Monoalkohol Methanol und das Hydroxid Natriumhydroxid ist.

17

6. Verfahren nach einem der Ansprüche 1 bis 5, dadurch gekennzeichnet, daß in Stufe (2a) elementarer Schwefel dem Reaktionsgemisch zugesetzt wird.

7. Verfahren nach Anspruch 6, dadurch gekennzeichnet, daß der Anteil eingeführten elementaren Schwefels bis etwa 3,6 Mol pro Mol eingeführten Hydroxids geht.

8. Verfahren nach einem der Ansprüche 1 bis 7, dadurch gekennzeichnet, daß in Stufe (2b) die kohlenwasserstoffhaltige monohalogenierte Verbindung 1 bis 70% Grammatom Halogen bezogen auf die Gesamtheit des "Addukts" oder des Gemisches aus Addukten + kohlenwasserstoffhaltige monohalogenierte Verbindung darstellt, wobei das "Addukt" oder das Gemisch aus Addukten und diese monohalogenierte kohlenwasserstoffhaltige Verbindung in einem Anteil von 1/1 bis 0,5/1 Grammatom Halogen pro Mol Hydroxid eingesetzt werden und die Temperatur bei 20 bis 120°C liegt.

9. Verfahren nach einem der Ansprüche 1 bis 8, dadurch gekennzeichnet, daß die Reaktion der Stufe (2b) unter einem Relativdruck, der bis etwa 1 MPa geht, durchgeführt wird.

10. Verfahren nach einem der Ansprüche 1 bis 9, dadurch gekennzeichnet, daß in der Stufe (2c) die Temperatur von 50°C bis zur Rückflußtemperatur des Mediums geht.

11. Verfahren nach einem der Ansprüche 1 bis 10, dadurch gekennzeichnet, daß es eine Stufe (4) umfaßt, in der die erhaltene polysulfurierte Olefinverbindung mit einer basischen Zusammensetzung kontaktiert und dann mit Wasser gewaschen wird.

12. Verfahren nach einem der Ansprüche 1 bis 11, dadurch gekennzeichnet, daß es kontinuierlich entsprechend einem Mehrstromverfahren mit Mehrfach-Kontakten durchgeführt wird.

13. Verfahren nach einem der Ansprüche 1 bis 12, dadurch gekennzeichnet, daß die erhaltene polysulfurierte Olefinzusammensetzung einen Schwefelgehalt, der bis zu 65% Massen-% geht und einen Chlorgehalt von weniger als etwa 0,1 Massen-% aufweist.

14. Verfahren nach Anspruch 13, dadurch gekennzeichnet, daß diese Verbindung einen Chlorgehalt von weniger als etwa 0,05 Massen-% hat.